# EUROPÄISCHE PATENTANMELDUNG

(11) **EP 1 818 889 A2**
(43) Veröffentlichungstag der Anmeldung: **15.08.2007**
(21) Anmeldenummer: 07466002.8
(22) Anmeldetag: 25.01.2007
(51) Int. Cl.: G08G 1/0968, G01C 21/26, G08G 1/0967

(54) **Anlage zur Ortsbestimmung**

(30) Priorität: 13.02.2006 CZ 20060096
(71) Anmelder: Skoda Auto a.s., 293 60 Mlada Boleslav (CZ)
(72) Erfinder: Slavik, Michal, 29501 Mnichovo Hradiste (CZ)

(57) **Zusammenfassung**

Das Gerät zur Ortung von Verkehrsmitteln (1, 2), insbesondere Fahrzeugen auf der Erdoberfläche, besteht aus einem im Fahrzeug fest eingebauten Navigationssystem (1) und einem Embedded-Gerät (3). Das im Fahrzeug fest eingebaute Navigationssystem (1) besteht aus dem Empfänger des Positionssystems (8, 9) und ist um die Funktionalität des RDS/TMC-Moduls (11, 12) und um weitere präzisierende oder ergänzende Informationen über seine Position erweitert - über die Geschwindigkeit einzelner Räder, über geschalteten Rückwärtsgang wie auch Informationen vom integrierten Gyro-Sensor und eventuelle Informationen vom elektronischen Kompass. Das Embedded-Gerät (3) empfängt Informationen über die Fahrzeugposition mittels Bluetooth (13, 14). Die gegenseitige Kommunikation zwischen einzelnen Geräten wird mittels des CAN-Bus (17, 17') sichergestellt, über den auch weitere Geräte angeschlossen werden können, die ebenfalls Positionsinformationen benötigen (4, 5, 6).

## Beschreibung

### Bereich der Technik

Die vorliegende Erfindung betrifft die Anlage zur Orts- (Positions-) -Bestimmung von Verkehrsmitteln, insbesondere Fahrzeugen, auf der Erdoberfläche.

### Gegenwärtiger Stand der Technik

Die in Fahrzeugen integrierten Satellitennavigationssysteme arbeiten überwiegend mit den GPS-Systemen - Global Positioning System. Die Erde umlaufen 25 Satelliten. Aus deren ständig gesendeten Positionsdaten kann die Position des Fahrzeugs auf der Erdoberfläche durch ein trigonometrisches Berechnungsmodell bestimmt werden.

Diese Navigationssysteme haben mehrere Möglichkeiten, um die Informationen über deren Position zu präzisieren oder zu ergänzen. Es handelt sich um: Informationen aus dem Fahrzeug-CAN-Bus (Industrie-Datenkommunikationsbus) über die Geschwindigkeit einzelner Räder (Kurvenradius wird berechnet), Informationen über geschalteten Rückwärtsgang (Rückwärtsgangschaltung) und Informationen aus dem integrierten Gyro-Sensor (Informationen über die Bewegungswinkeländerung) und eventuell Informationen aus dem Kompass.

Eine weitere Ortungsmöglichkeit sind sog. Embedded-Geräte (ins Fahrzeug eingelegte Geräte, z.B. kleiner Taschencomputer - PDA, tragbarer Rechner - Laptop, intelligentes Telefon - Smartphone usw.). Diese sind nur auf Informationen vom dem Empfänger des Positionssystems abgewiesen (gewöhnlich der oben genannte GPS). Embedded-Geräte haben zurzeit aufgrund der kommerziellen Architektur keine Möglichkeit, die zurzeit verfügbaren Technologien zur Präzisierung oder Ermöglichung der Navigation so zu nutzen, wie es bei fest im Fahrzeug integrierten Navigationssystemen der Fall ist. In Gebieten mit einem komplizierten Empfang des Satellitensignals, wie z.B. Stadtbebauung, Bergpässe, Walddurchfahrten oder Tunnel, ist die Ortung fast unmöglich. Nur bei einigen besser ausgestatteten Empfängern kommt es zu einer mathematischen Abschätzung der Position aufgrund der Werte der vorherigen Messungen; dies findet gewöhnlich einmal pro Sekunde statt und es kommt dabei bei durchschnittlichen Fahrgeschwindigkeiten des Fahrzeugs zu beträchtlichen Fehlern und verwirrenden Ergebnissen, die dem Nutzer durch die entsprechende Anwendung interpretiert werden. Dieser Fehler ist in den meisten Fällen nicht nachvollziehbar und der Nutzer hat keine Kontrolle darüber, ob es sich um einen Messwert oder um eine Schätzung handelt. Der Satellitenempfang ist in Embedded-Geräten noch durch die Fahrzeugkonstruktion allein limitiert, insbesondere durch das feste Metalldach, das sich auf die Empfangsqualität negativ auswirkt (Signalabschirmung). Dieser Nachteil wird durch diverse zusätzliche Antennen gelöst, und zwar sowohl aktive (der Output ist direkt das Datenprotokoll NMEA oder ein ähnliches) als auch passive (die nur das Hochfrequenzsignal von den empfangenden Antennen an den Empfänger zur Bearbeitung weiterleiten). Diese beiden Lösungen belasten den Benutzer durch einen unkomfortablen Zugang. Eine weitere Gruppe stellen Positionsempfänger dar, die mit der drahtlosen Technologie Bluetooth ausgestattet sind (drahtloser Kommunikationsstandard, der zur Verbindung von Geräten, wie Mobiltelefone, Laptops und Taschencomputer bestimmt ist). Bluetooth-GPS-Empfänger sind Standard-GPS-Empfänger + Batterien + Bluetooth-Sender; das Gerät verhält sich für andere Geräte wie ein gewöhnlicher serienmäßig kommunizierender per Kabel verbundener GPS-Empfänger. Dies bringt eine Verbesserung des Komforts, aber vom Prinzip der Sache her wird der Empfangsbedarf auf die gleiche Art und Weise gelöst, wie bei den oben genannten Empfängern.

### Prinzip der Erfindung

Die oben genannten Nachteile werden durch ein Gerät behoben, das als Lösung eine Kombination der Vorteile einzelner Geräte in eine voll integrierte Einheit bietet. Dieses Gerät ist eine Kombination des Satellitenpositionssystem-Empfängers; eines mit dem Fahrzeug kommunizierenden Geräts - CAN BUS (Schnittstelle); eines Bluetooth Access Points - Sender des Bluetooth-Signals, der die Kommunikation mit mehreren Geräten gleichzeitig ermöglicht; eines Empfängers und eines RDS/TMC-Nachrichten-Dekoders (Radio Data System / Traffic Message Channel) und wählbar ein Gyro-Sensors. Dadurch bekommt der Nutzer einen absolut gleichwertigen Input für das Navigationssystem in einem Embedded-Gerät, der bei einem fest eingebauten Navigationssystem möglich ist. Aufgrund der Kompatibilität mit den bestehenden Applikationen in Embedded-Geräten wird ein einheitliches standardisiertes Kommunikationsprotokoll für die GPS-Datenübertragung in Echtzeit gewählt (am häufigsten das Multiplex-Datenprotokoll NMEA) ergänzt um eingegebene Informationen aus dem CAN-Bus und dem RDS/TMC-Empfänger. Bei Geräten, die über keine Applikation verfügen, die dieses neue System vollständig nutzt, wird der in das Protokoll eingegebene Teil ignoriert. Zum Beispiel das heutzutage angebotene Navigationssystem für PDA ist imstande nur Informationen vom Datenprotokoll zu nutzen, die es versteht (es hält sich an der Norm). Das neu erstellte Programm wird bereits eine Erweiterung des Datenprotokolls um neue Funktionen implementiert haben, und so werden alle präzisierenden Informationen genutzt. Das System verhält sich für diese als ein durch die Standardnorm beschriebener GPS-Empfänger. Allgemein gilt dieses Prinzip für die Geltendmachung des Empfangs auch von anderen Positionssystemen, die nicht das NMEA-Protokoll und das System der GPS-Satelliten nutzen. In Zukunft kann dies auf das System Galileo (europäisches Satellitennavigationssystem) oder auf ältere Positionssysteme angewendet werden. Aufgrund der Vielfältigkeit der durch die breite Öffentlichkeit verwendeten Embedded-Geräte wurde die eine drahtlose Methode des Geräteanschlusses über Bluetooth gewählt. Der Beitrag dieser Lösung sollte in der Erhöhung der Sicherheit und der Genauigkeit des Navigationssystems bestehen. Der Nutzer wird von der Notwendigkeit mit Kabelverbindungen des Embedded-Gerätes zu manipulieren befreit. Die Sicherheit wird insbesondere durch die Beseitigung jedweder im Fahrzeug frei liegender Geräte erhöht (z.B. auf der Schalttafel frei liegender kabelloser GPS-Empfänger, unpassend positionierter Kabelstrang, der die Handbewegung im Bereich der Mittelkonsole und des Schalthebels verhindert usw.). Ein weiterer günstiger Aspekt ist die Möglichkeit, dieses System über den CAN-Bus mit Geräten zu verbinden, die die gleichen Positionsinformationen parallel benötigen. Dies sind z.B. Security Pager (Sicherheitspager) - Schutz vom geparkten Fahrzeug, Notruf- Herbeiholung von Hilfe bei Notfall, S.O.S. call - Notruf, Service call - Serviceanruf; eine andere Form des Navigationssystems - fest eingebautes Navigationsgerät, Radio - mit der Möglichkeit, die geographische Lage mittels einer einfachen Textinformation anzuzeigen; Dataloger - Gerät zur ständigen Aufzeichnung der Fahrzeugposition für eine weitere Verarbeitung; ein einfaches System, das über die Annäherung einem durch den Nutzer eingestellten Zielgebiet informiert usw. Ein weiterer nicht weniger bedeutender Beitrag dieses Systems ist die Möglichkeit, die Echtzeit für alle angeschlossenen Geräte zu synchronisieren. Dieses Zeitsignal ist Bestandteil des durch das Positionssystem gesendeten Datenprotokolls.

Diese Funktionalität findet Anwendung sowohl in der Fahrzeug-Komfortelektronik (Bordcomputer usw.), als auch auf dem Gebiet der Sicherheit (z.B. in der Blackbox, als zeitlich synchrone Informationen beim Verkehrsunfall).

### Übersicht der Abbildungen in der Zeichnung

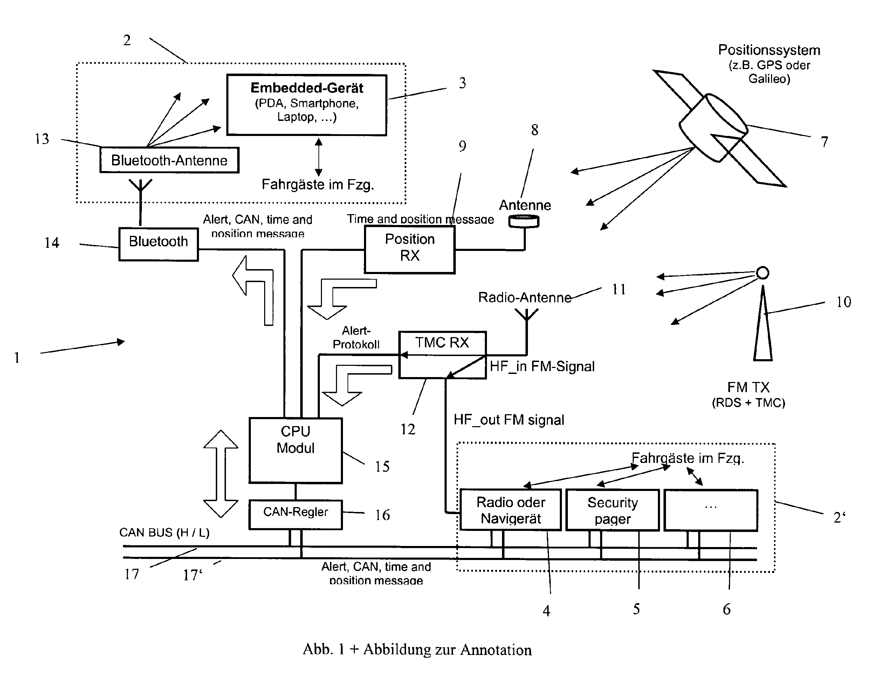

Die Erfindung wird mittels der Abb. 1 näher erläutert, auf der das Blockanschlussschema des Gerätes zur Ortung von Verkehrsmitteln, insbesondere Fahrzeugen, auf der Erdoberfläche dargestellt ist.

### Ausführungsbeispiele

Das Gerät zur Ortung von Verkehrsmitteln (1, 2), insbesondere Fahrzeugen auf der Erdoberfläche, besteht aus einem im Fahrzeug fest eingebauten Navigationssystem (1) und einem Embedded-Gerät (3).
Die Hauptkomponenten des im Fahrzeug fest eingebauten Navigationssystems (1) werden nachfolgend im Text beschrieben. Es handelt sich insbesondere um das Gerät, das eine gegenseitige Kommunikation zwischen Steuergeräten sichergestellt - der CAN-Bus (17, 17'). Am CAN-Bus ist bei modernen Fahrzeugen praktisch das gesamte Elektroniksystem angeschlossen. In diesem Falle handelt es sich um das Radio mit Navigation (4), den Security-Pager (5) und weitere Geräte (6) - dies können sein z.B. der Notruf - Herbeiholung von Hilfe bei Notfall, S.O.S. call - Notruf, Service call - Serviceanruf; eine andere Form des Navigationssystems - fest eingebautes Navigationsgerät, Radio - mit der Möglichkeit, die geographische Lage mittels einer einfachen Textinformation anzuzeigen; Dataloger - Gerät zur ständigen Aufzeichnung der Fahrzeugposition für eine weitere Verarbeitung; ein einfaches System, das über die Annäherung einem durch den Nutzer eingestellten Zielgebiet informiert usw.
Die Aktivität von CAN-BUS wird durch den Regler (16) gesteuert. Über das Schaltgetriebe (15) wird an den CAN-Bus (17, 17") ein Radioempfänger angeschlossen - FM RX (12) mit Antenne (11). Die Antenne (11) empfängt das Signal vom FM TX - Radioempfänger (10). Mit diesen Sendern (10), bzw. FM-Radiowellen, die durch diese gesendet werden, ist praktisch die gesamte Fläche der Erdkugel bedeckt. Mit Radiowellen werden durch den Sender (10) ebenfalls digitale Informationen des RDS-TMC-Systems übertragen. Das System RDS-TMC *(Radio Data System - Traffic Message Channel,* Verkehrsinformationskanal), das auf dem Alert-Protokoll *(Agreed Layer of European RDS-TMC*) basiert, bietet Autofahrern mittels RDS aktuelle Verkehrsinformationen. RDS ist eine Radiotechnik, die die Übertragung unhörbarer digitaler Informationen im Seitenband der Radiosendung auf FM-Frequenzen ermöglicht. Die durch die RDS-Technik übertragenen Informationen werden in Gruppen gesendet, von welchen eine für Verkehrsinformationen reserviert ist, die dem Fahrer durch den Empfänger (12) auf die gewünschte Weise präsentiert werden - als Sprach-, Text- oder graphische Ausgabe auf dem Display des Radios oder des Navigationssystems (4). Ferner sind am CAN-Bus (17, 17") mittels des CAN-Reglers (16) und des Steuergeräts (15) der Fahrzeugpositionssignalempfänger Position RX (9) und die Antennen (8) angeschlossen.
Durch die Antenne (8) des Fahrzeugpositionssignalempfängers Position RX (9) werden Positionsdaten vom Positionssystem (7) empfangen und durch ein trigonometrisches Berechnungsmodell wird aus diesen die Position des Fahrzeugs auf der Erdoberfläche bestimmt, die gemeinsam mit der Zeitangabe an den CAN-Bus (17, 17") weitergeleitet wird.
Die letzte wichtige Komponente des Geräts sind der Bluetooth-Sender (14) und die Bluetooth-Antenne (13). Bluetooth ist ein drahtloser Kommunikationsstandard, der zur Verbindung von Geräten, wie Mobiltelefone, Laptops und Taschencomputer bestimmt ist. Er hat eine größere Reichweite, als die veraltete Infrarot-Übertragung, die zusätzlich durch eine direkte Sichtbarkeit zwischen beiden Geräten bedingt ist. Die Bluetooth-Radioübertragung erfolgt im lizenzfreien 2,4GHz-Band.
Das Embedded-Gerät (3) empfängt vom CAN-Bus (17, 17') mittels des Bluetooth-Senders (14) und der Bluetooth-Antenne (13) Signale über Position, Zeit, Verkehrsinformationen (RDS/TMC) und präzisierende oder ergänzende Informationen über seine Position - über die Geschwindigkeit einzelner Räder, über geschalteten Rückwärtsgang wie auch Informationen vom integrierten Gyro-Sensor und eventuelle Informationen vom elektronischen Kompass. Das Embedded-Gerät (3) präsentiert dem Fahrer die Positionsinformationen auf die gewünschte Art und Weise - als Sprach-, Text- oder graphische Ausgabe (auf dem Display des Radios) und verhält sich so wie ein voll funktionsfähiges drahtloses Positionssystem.

### Industrielle Nutzbarkeit

Das Gerät dient zur Bestimmung der Position von Verkehrsmitteln, insbesondere Fahrzeugen, auf der Erdoberfläche.

## Patentansprüche

1. Gerät zur Bestimmung der Position von Verkehrsmitteln, insbesondere Fahrzeugen, auf der Erdoberfläche (1,3), bestehend aus dem fest im Fahrzeug eingebauten Navigationssystem (1) und einem Embedded-Gerät (3), bestehend aus dem Empfänger des Positionssystems (8,9) ergänzt um das RDS/TMC (11, 12), wobei die gegenseitige Kommunikation zwischen einzelnen Geräten des Fahrzeugs (8, 9, 11, 12) durch den CAN BUS (17, 17') sichergestellt wird, **dadurch gekennzeichnet, dass** Informationen über die Position des Fahrzeugs, die Zeit wie auch Verkehrsinformationen vom CAN BUS (17, 17') mittels drahtloser Übertragung (13, 14) an das Embedded-Gerät (3) übergeben werden.

2. Gerät entsprechend dem Anspruch 1, **dadurch gekennzeichnet, dass** die drahtlose Übertragung mittels der Bluetooth-Technologie realisiert wird.

3. Gerät entsprechend dem Anspruch 1, **dadurch gekennzeichnet, dass** Informationen über die Position den Fahrgästen durch das Embedded-Gerät (3) als Sprach-, Text- oder graphische Ausgabe präsentiert werden.

4. Gerät entsprechend dem Anspruch 1, **dadurch gekennzeichnet, dass** das Embedded-Gerät (3) durch einen Taschencomputer und/oder durch einen tragbaren Computer und/oder durch ein intelligentes Telefon gebildet wird.

5. Gerät entsprechend dem Anspruch 1, **dadurch gekennzeichnet, dass** Informationen über die Fahrzeugposition, die Zeit und die Verkehrsinformationen mittels weiterer Informationen über die Geschwindigkeit einzelner Räder und/oder der Informationen über geschalteten Rückwärtsgang und/oder Informationen und/oder Informationen vom elektronischen Kompass präzisiert oder ergänzt werden.

6. Gerät entsprechend dem Anspruch 1, **dadurch gekennzeichnet, dass** das System über den CAN-Bus (17, 17') auch an weitere Geräte angeschlossen ist, die ebenfalls Positionsinformationen benötigen, das Radio mit Navigation (4) und/oder den Security-Pager (5) und/oder weitere Geräte (6), wie das System Herbeiholung von Hilfe bei Notfall und/oder der Notruf und/oder der Serviceanruf und/oder das Radio mit der Möglichkeit, die geographische Lage mittels einer einfachen Textinformation anzuzeigen und/oder ein Gerät zur ständigen Aufzeichnung der Fahrzeugposition für eine weitere Verarbeitung und/oder ein einfaches System, das über die Annäherung einem durch den Nutzer eingestellten Zielgebiet informiert.
